# EUROPEAN PATENT APPLICATION

(11) **EP 4 672 538 A1**
(43) Date of publication of application: **31.12.2025**
(21) Application number: 24769970.5
(22) Date of filing: 13.03.2024
(51) Int. Cl.: H02J 3/32

(54) **ENERGY STORAGE APPARATUS AND FLEXIBLE DIRECT-CURRENT POWER TRANSMISSION SYSTEM**

(30) Priority: 14.03.2023 CN 202310243743
(71) Applicant: Contemporary Amperex Technology Co., Limited, Ningde, Fujian 352100 (CN); Shanghai Jiao Tong University, Shanghai 200240 (CN)
(72) Inventor: CAI, Xu, Ningde, Fujian 352100 (CN); YU, Dongxu, Ningde, Fujian 352100 (CN); YANG, Renxin, Ningde, Fujian 352100 (CN); LIANG, Liliuyuan, Ningde, Fujian 352100 (CN); LU, Yanhua, Ningde, Fujian 352100 (CN); LI, Zhekai, Ningde, Fujian 352100 (CN)
(74) Representative: Kraus & Lederer PartGmbB
(86) International application number: PCT/CN2024/081496
(87) International publication number: WO 2024/188279

(57) **Abstract**

This application discloses an energy storage apparatus and a flexible direct-current power transmission system. The energy storage apparatus is connected between a positive direct-current bus and a negative direct-current bus of a receiving-end converter of the flexible direct-current power transmission system and includes an energy storage battery. The energy storage battery charges and/or discharges at a first power during normal operation of the flexible direct-current power transmission system. The energy storage battery charges and/or discharges at a second power when a transmission fault occurs at the receiving-end converter and results in surplus power in the flexible direct-current power transmission system, where the second power is greater than the first power. The larger second power of the energy storage battery is used to absorb the surplus power in the flexible direct-current power transmission system, and the smaller first power of the energy storage battery is used to implement routine energy storage and release. A power of the energy storage apparatus is lowered, thereby lowering costs of the energy storage apparatus.

## Description

This application claims priority to Chinese Patent Application No. 2023102437430, filed on March 14, 2023 and entitled "ENERGY STORAGE APPARATUS AND FLEXIBLE DIRECT-CURRENT POWER TRANSMISSION SYSTEM", which is incorporated herein by reference in its entirety.

### TECHNICAL FIELD

This application relates to the field of flexible direct-current power transmission, and in particular, to an energy storage apparatus and a flexible direct-current power transmission system.

### BACKGROUND

To enhance an active power regulation capability of a flexible direct-current power transmission system and fully leverage support by the flexible direct-current power transmission system to a power grid, an energy storage apparatus in flexible direct-current power transmission system holds significant research value and broad application prospects.

The energy storage apparatus in a flexible direct-current power transmission system primarily serves the following three functions: (1) Flexible direct-current power transmission is an effective approach for grid integration of renewable energy. Applying an energy storage apparatus to a flexible direct-current power transmission system can effectively mitigate adverse impacts of inherent fluctuation of renewable energy on the grid. (2) Applying an energy storage apparatus to a flexible direct-current power transmission system can reduce power impact caused by faults on the grid, thereby improving the stability and safety of the power system. (3) Power surplus is a significant issue threatening the safe and stable operation of flexible direct-current power transmission system. With an energy storage apparatus storing surplus power, a capability of fault ride through of the system can be ensured, enhancing operational reliability of the flexible direct-current power transmission system.

Depending on position for energy storage, there are three technical approaches: alternating-current side energy storage, flexible direct-current valve energy storage, and direct-current side energy storage. The approach of alternating-current side energy storage has limitations in application scenarios and is not suitable for offshore wind power transmission via flexible direct current. The approach of flexible direct-current valve energy storage requires energy storage components within a submodule of the flexible direct-current valve, significantly increasing a volume and costs of the submodule. In addition, issues such as battery fire hazards and lifespan mismatches with a converter valve are prominent.

However, in existing energy storage system solutions, the energy storage apparatus needs to simultaneously perform support and energy dissipation functions, requiring a power of the energy storage apparatus to be close to or consistent with a rated power of the flexible direct-current power transmission system. Consequently, costs of the energy storage apparatus are excessively high.

### SUMMARY

This application provides an energy storage apparatus and a flexible direct-current power transmission system, capable of lowering costs of the energy storage apparatus.

To address the above technical problem, a technical solution adopted by this application is to provide an energy storage apparatus. The energy storage apparatus is connected between a positive direct-current bus and a negative direct-current bus of a receiving-end converter of a flexible direct-current power transmission system and includes an energy storage battery, where the energy storage battery charges and/or discharges at a first power during normal operation of the flexible direct-current power transmission system, and the energy storage battery charges and/or discharges at a second power when a transmission fault occurs at the receiving-end converter, where the second power is greater than the first power.

The larger second power of the energy storage battery is used to absorb the surplus power in the flexible direct-current power transmission system, and the smaller first power of the energy storage battery is used to implement routine energy storage and release. A power of the energy storage apparatus is lowered, thereby lowering costs of the energy storage apparatus.

In some embodiments, the first power is less than or equal to a rated power of the energy storage battery, and the second power is greater than the rated power of the energy storage battery.

This approach ensures that the rated power of the energy storage battery is less than the second power, resulting in a smaller power requirement for the energy storage battery, thereby reducing the power of the energy storage apparatus and costs of the energy storage apparatus.

In some embodiments, the second power is not less than 5 times the first power, and the second power is not greater than 7 times the first power.

The second power of the energy storage battery corresponds to a power of the flexible direct-current power transmission system, so the rated power of the energy storage battery only needs to be around 20% of the power of the flexible direct-current power transmission system, lowering the power of the energy storage apparatus and reducing the costs of the energy storage apparatus.

In some embodiments, discharge duration in which the energy storage battery discharges at the first power is not less than 1 minute.

This approach ensures that the energy storage battery can normally discharge.

In some embodiments, the discharge duration in which each energy storage battery discharges at the first power is not less than 2 hours.

This approach ensures the normal operation of the energy storage battery.

In some embodiments, when a sending-end converter of the flexible direct-current power transmission system is capable of performing voltage regulation in response to the transmission fault, charge duration in which the energy storage battery charges at the second power is not less than 200 milliseconds; or when a sending-end converter of the flexible direct-current power transmission system is incapable of performing voltage regulation in response to the transmission fault, charge duration in which the energy storage battery charges at the second power is not less than 1 second.

The charge duration in which the energy storage battery charges at the second power ensures that the energy storage battery can perform emergency energy storage during the fault in the flexible direct-current power transmission system, preventing damage to the flexible direct-current power transmission system.

In some embodiments, when the sending-end converter of the flexible direct-current power transmission system is capable of performing voltage regulation in response to the transmission fault, the charge duration in which the energy storage battery charges at the second power is not greater than 500 milliseconds; or when the sending-end converter of the flexible direct-current power transmission system is incapable of performing voltage regulation in response to the transmission fault, the charge duration in which the energy storage battery charges at the second power is not greater than 2 seconds.

This further ensures that the energy storage battery can perform emergency energy storage during the fault in the flexible direct-current power transmission system, preventing damage to the flexible direct-current power transmission system.

In some embodiments, the energy storage apparatus includes a plurality of energy storage modules connected in series between the positive direct-current bus and the negative direct-current bus, a first lead terminal of a first energy storage module is connected to the positive direct-current bus, a first lead terminal of each remaining energy storage module is connected to a second lead terminal of a preceding energy storage module, a second lead terminal of a last energy storage module is connected to the negative direct-current bus, and each energy storage module includes the energy storage battery and a switch circuit, where the switch circuit is for connecting the energy storage battery between a first lead terminal and a second lead terminal within a same energy storage module of the energy storage battery in a first state, and short-circuiting first lead terminal and second lead terminal within a same energy storage module in a second state.

The energy storage modules are connected in series, allowing flexible integration of the energy storage modules, and in the second state, the energy storage modules can be protected, preventing overload and burnout of the energy storage modules.

In some embodiments, the switch circuit includes a first switch module and a second switch module, a first connection terminal of the first switch module is connected to a positive electrode of the energy storage battery, a second connection terminal of the first switch module is connected to a first connection terminal of the second switch module, a second connection terminal of the second switch module is connected to a negative electrode of the energy storage battery, the first lead terminal is connected between the second connection terminal of the first switch module and the first connection terminal of the second switch module, and the second lead terminal is connected between the second connection terminal of the second switch module and the negative electrode of the energy storage battery.

This approach controls the operation state of the energy storage battery, enabling smooth integration and charge/discharge of the energy storage battery.

In some embodiments, the first switch module includes a first IGBT and a first diode, where the first connection terminal and the second connection terminal of the first switch module correspond to a collector and an emitter of the first IGBT respectively, a negative electrode of the first diode is connected to the first connection terminal of the first switch module, and a positive electrode of the first diode is connected to the second connection terminal of the first switch module; and the second switch module includes a second IGBT and a second diode, where the 5 first connection terminal and the second connection terminal of the second switch module correspond to a collector and an emitter of the second IGBT respectively, a negative electrode of the second diode is connected to the first connection terminal of the second switch module, and a positive electrode of the second diode is connected to the second connection terminal of the second switch module.

The combination of IGBTs and diodes enable flexible switch of the switch modules. This is convenient and efficient.

In some embodiments, each energy storage module further includes a buffer circuit, where the buffer circuit is configured to filter current within the energy storage module.

The buffer circuit is configured to flexibly regulate the power and voltage within the energy storage module and optimize power quality.

In some embodiments, the energy storage apparatus includes a smoothing reactor connected in series with the plurality of energy storage modules.

The smoothing reactor is configured to stabilize waveforms of the energy storage modules, resulting in smoother current within the energy storage apparatus.

To address the above technical problem, another technical solution adopted by this application is to provide a flexible direct-current power transmission system, where the flexible direct-current power transmission system includes the energy storage apparatus as described in any one of the above embodiments.

In the above solutions, the larger second power of the energy storage battery is used to absorb the surplus power in the flexible direct-current power transmission system, and the smaller first power of the energy storage battery is used to implement routine energy storage and release. The power of the energy storage apparatus is lowered, thereby lowering costs of the energy storage apparatus and the flexible direct-current power transmission system.

### BRIEF DESCRIPTION OF DRAWINGS

To more clearly illustrate the technical solutions in the embodiments of this application, the drawings for describing the embodiments are briefly introduced below. It is clear that the drawings described below are merely some embodiments of this application, and persons of ordinary skill in the art can obtain other drawings based on these drawings without creative effort, where:
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural diagram of a flexible direct-current power transmission system according to some embodiments of this application;
FIG. 5 is a schematic structural diagram of an energy storage apparatus according to some embodiments of this application; and
FIG. 6 is a schematic structural diagram of an energy storage module according to some embodiments of this application.

Description of reference signs:
vehicle 1000;
battery 100; controller 200; motor 300;
box 10; first portion 11; second portion 12;
battery cell 20; end cover 21; electrode terminal 21a; housing 22; electrode assembly 23; tab 23a;
flexible direct-current power transmission system 30; power generation apparatus 31; alternating-current cable 32; sending-end converter 33; positive direct-current bus 341; negative direct-current bus 342; receiving-end converter 35; energy storage module SM; energy storage apparatus 36; first switch module S1; second switch module S2; energy storage battery 361; first IGBT 362; first diode 363; second IGBT 364; second diode 365; first lead terminal 366; second lead terminal 367; and buffer circuit 369.

### DESCRIPTION OF EMBODIMENTS

To make the objectives, technical solutions, and advantages of this application clearer, the technical solutions in the embodiments of this application are described clearly and completely below with reference to the drawings for multiple embodiments of this application. It should be understood that the described embodiments are only a part of the embodiments of this application, rather than all embodiments. Based on the embodiments described in this application, all other embodiments obtained by persons of ordinary skill in the art without creative effort fall within the protection scope of this application.

Unless otherwise defined, all technical and scientific terms used in this application have the same meanings as commonly understood by persons skilled in the technical field of this application; the terms used in the specification of this application are merely for the purpose of describing specific embodiments and are not intended to limit this application; the terms "include", "comprise", "have", "having", "contain", "containing", and the like in the specification, claims, and the above drawings of this application are inclusive terms. Therefore, if a method or an apparatus "includes," "comprises," or "has," for example, one or more steps or elements, the method or the apparatus contains the one or more steps or elements, but is not limited to the one or more elements. The terms "first," "second," and the like in the specification, claims, or the above drawings of this application are used to distinguish different objects, rather than to describe a specific order or primary-secondary relationship. In addition, the terms "first," "second," and the like are used for descriptive purposes only and cannot be understood as indication or implication of relative importance or implicit indication of the number of technical features indicated. Thus, a feature defined with "first" or "second" may explicitly or implicitly include one or more of such features. In the description of this application, unless otherwise specified, "plurality" means two or more.

In the description of this application, it should be understood that the orientations or positional relationships indicated by the terms "center", "transverse", "length", "width", "upper", "lower", "front", "rear", "left", "right", "perpendicular", "horizontal", "top", "bottom", "inside", "outside", "axial", "radial", "circumferential", and the like are based on the orientations or positional relationships shown in the accompanying drawings. These terms are used merely for ease and brevity of description of this application rather than indicating or implying that the apparatuses or components mentioned must have specific orientations or must be constructed or operated according to specific orientations, and therefore shall not be construed as limitations on this application.

In the description of this application, it should be noted that, unless otherwise explicitly specified and limited, the terms "install", "connect", "connection", and "attach" should be understood in a broad sense, for example, as a fixed connection, a detachable connection, or an integral connection; a direct connection, an indirect connection through an intermediate medium, or internal communication between two elements. For persons of ordinary skill in the art, the specific meanings of the above terms in this application can be understood based on specific circumstances.

Reference to "an embodiment" in this application means that a specific feature, structure, or characteristic described based on the embodiment may be included in at least one embodiment of this application. The appearance of this phrase in various places in the specification does not necessarily refer to the same embodiment, nor is it an independent or alternative embodiment mutually exclusive with other embodiments. Persons skilled in the art explicitly and implicitly understand that the embodiment described in this application can be combined with other embodiments.

As mentioned above, it should be noted that when used in this specification, the term "include/contain" is used to clearly indicate the existence of an indicated feature, integer, step, or component, but does not exclude the existence or addition of one or more other features, integers, steps, or components or sets of features, integers, steps, or components. As used in this application, singular forms "one", "a", and "the" also include plural forms, unless otherwise clearly dictated in the context.

The terms "a" and "one" in this specification can mean a single, but can also have the same meaning as "at least one" or "one or more." The term "approximately" generally means a mentioned value plus or minus 10%, or more specifically the mentioned value plus or minus 5%. The term "or" used in the claims means "and/or" unless it is clearly stated that the term "or" only refers to an alternative solution.

The term "and/or" in this application is merely an association relationship describing associated objects, indicating that three relationships may exist, for example, A and/or B may indicate: A exists alone, A and B exist simultaneously, and B exists alone. In addition, the character "/" in this application generally indicates an "or" relationship between the contextually associated objects.

A battery mentioned in the art can be classified into primary battery and rechargeable battery based on whether the battery is rechargeable. A primary battery (Primary Battery), also known as a "disposable" battery, cannot be recharged after being charged and must be discarded. A rechargeable battery, also known as a secondary battery (Secondary Battery), secondary cell, and storage battery, is differently processed with different materials compared with the primary battery, and has the advantage of being reused when charged. An output current capacity of rechargeable batteries is larger than that of most primary batteries. Currently, common types of rechargeable batteries include: lead-acid battery, nickel-hydrogen battery, and lithium-ion battery. Lithium-ion batteries have advantages such as light weight, high capacity (1.5 to 2 times that of nickel-hydrogen batteries of the same weight), no memory effect, and a very low self-discharge rate. Despite their relatively high costs, lithium-ion batteries are widely used. Lithium-ion batteries are also extensively applied in pure electric vehicles and hybrid vehicles. Lithium-ion batteries used for such purposes have relatively lower capacity, but offer a larger output and charge current and has a longer lifespan, though at higher costs.

The battery described in the embodiments of this application refers to a rechargeable battery or a primary battery. The embodiments disclosed in this application are described primarily with a lithium-ion battery as an example. It should be understood that the embodiments disclosed in this application are applicable to any other suitable type of rechargeable battery. The battery mentioned in the embodiments disclosed in this application can be directly or indirectly applied to an appropriate device to power such device.

The battery mentioned in the embodiments disclosed in this application refers to a single physical module including one or more battery cells to provide a predetermined voltage and capacity. For example, the battery mentioned in this application may include a battery module, a battery pack, or the like. A battery cell is the basic unit in a battery and can generally be classified, based on packaging method, into cylindrical battery cell, prismatic battery cell, and pouch battery cell.

The inventors have noted that, with the increasingly urgent global response to climate change, energy shortages, and growing concerns over energy supply security, the world's energy development has entered a new phase of strategic adjustment. In current conventional wind power flexible direct-current power transmission systems, when a low-voltage fault occurs in the grid, an active power transmission capability of a receiving-end converter rapidly decreases. If a wind power at this time exceeds a remaining power transmission capability of the receiving-end converter, a surplus wind power accumulates on a direct-current bus, causing a direct-current voltage to rise rapidly and triggering overvoltage protection. Currently, direct-current dissipation apparatuses are generally used to dissipate surplus power. However, existing direct-current dissipation apparatuses require a large number of capacitors, significantly increasing footprints and costs of the direct-current dissipation apparatuses. In addition, these solutions require the construction of a separate dissipation station, and factors such as site selection, wiring, and insulation require additional design, making the construction costs of existing direct-current dissipation apparatuses extremely high, potentially accounting for up to 40% of the costs for converter stations. In previous energy storage system solutions, to achieve both support and dissipation functions, a power of the energy storage system needs to be close to or consistent with a rated power, resulting in excessively high costs for the energy storage system.

To address the issue of high costs in energy storage systems, the inventors have noted that energy storage apparatuses rarely operate at full power, and full-power operating time is short. Therefore, the inventors have considered that an energy storage battery with a short-term high-rate charge power can be used as a main energy storage component of the energy storage apparatus for charge and discharge. In this way, the energy storage battery does not need to reach a rated operating power of a flexible direct-current power transmission system, lowering a power of the energy storage battery, thereby saving costs.

Based on the above considerations, to address the issue of high costs in energy storage systems, the inventors, after in-depth research, have designed an energy storage apparatus and a flexible direct-current power transmission system.

Devices to which the battery described in the embodiments of this application is applicable include, but are not limited to: electric bicycles, electric vehicles, ships, spacecraft, electric toys, electric tools, and the like. For example, spacecraft include airplanes, rockets, space shuttles, and spaceships; electric toys include fixed or mobile electric toys, such as game consoles, electric vehicle toys, electric ship toys, and electric airplane toys; electric tools include electric metal cutting tools, electric grinding tools, electric assembly tools, and electric railway tools, such as electric drills, electric grinders, electric wrenches, electric screwdrivers, electric hammers, impact drills, concrete vibrators, and electric planers.

Application of the battery described in the embodiments of this application is not limited to the devices described above, and the battery can be further applied to all devices using batteries. For brevity, the following embodiments are described using an electric vehicle as an example.

The following embodiments, for ease of explanation, take a vehicle 1000 as an example of an electric device according to an embodiment of this application.

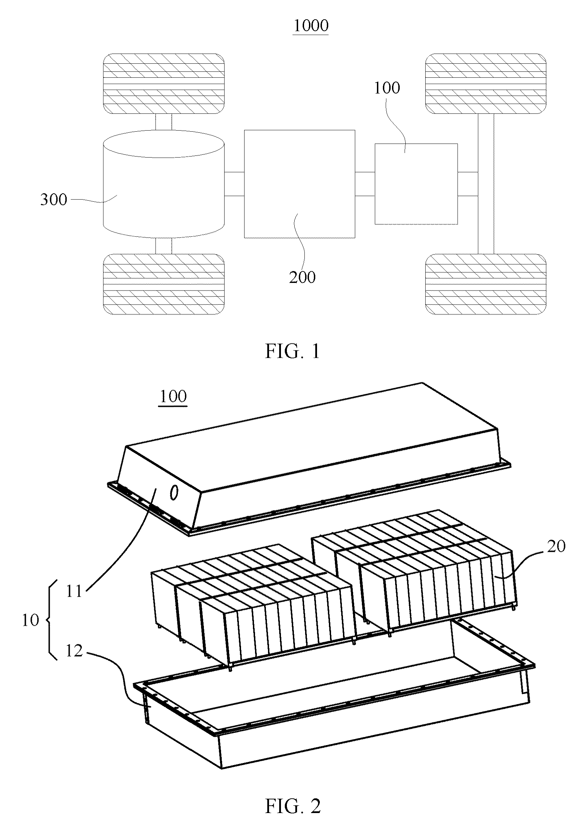

Refer to FIG. 1. FIG. 1 is a schematic structural diagram of the vehicle 1000 according to some embodiments of this application. The vehicle 1000 may be a fuel vehicle, a gas vehicle, or a battery vehicle, where the battery vehicle may be a pure electric vehicle, a hybrid vehicle, an extended-range vehicle, or the like. The vehicle 1000 is provided with a battery 100 inside, and the battery 100 may be disposed at the bottom, front, or rear of the vehicle 1000. The battery 100 may be configured for powering the vehicle 1000. For example, the battery 100 may serve as an operational power source for the vehicle 1000. The vehicle 1000 may further include a controller 200 and a motor 300, where the controller 200 is configured to control the battery 100 to supply power to the motor 300, for example, to meet the power demands for starting, navigation, and driving of the vehicle 1000.

In some embodiments of this application, the battery 100 can serve not only as the operational power source for the vehicle 1000 but also as a driving power source for the vehicle 1000, completely or partially replacing fossil fuel or natural gas to provide driving traction for the vehicle 1000.

Refer to FIG. 2. FIG. 2 is a schematic structural exploded view of a battery 100 according to some embodiments of this application. The battery 100 includes a box 10 and a battery cell 20, where the battery cell 20 is accommodated within the box 10. The box 10 is configured to provide an accommodating space for the battery cell 20. A structure of the box 10 may be varied. In some embodiments, the box 10 may include a first portion 11 and a second portion 12, where the first portion 11 and the second portion 12 cover each other, and the first portion 11 and the second portion 12 jointly define an accommodating space for the battery cell 20. The second portion 12 may be a hollow structure with an open end, and the first portion 11 may be a plate-like structure, where the first portion 11 covers the open side of the second portion 12, so that the first portion 11 and the second portion 12 jointly define the accommodating space; alternatively, both the first portion 11 and the second portion 12 may be hollow structures with an open side, where the open side of the first portion 11 covers the open side of the second portion 12. The box 10 formed by the first portion 11 and the second portion 12 may be various shapes, such as a cylinder or a cuboid.

In the battery 100, the battery cell 20 may be provided in plurality, and the plurality of battery cells 20 may be connected in series, parallel, or series-parallel, where the series-parallel connection refers to a combination of series and parallel connections of the plurality of battery cells 20. The plurality of battery cells 20 may be directly connected in series, parallel, or series-parallel, and then an entirety of the plurality of battery cells 20 is accommodated in the box 10. Alternatively, the battery 100 may be formed by first connecting a plurality of battery cells 20 in series, parallel, or series-parallel to form a battery module, and then connecting a plurality of battery modules in series, parallel, or series-parallel to form an entirety accommodated in the box 10. The battery 100 may further include other structures, for example, the battery 100 may further include a busbar component configured to implement electrical connection between the plurality of battery cells 20.

Each battery cell 20 may be a secondary battery or a primary battery, and may be a lithium-sulfur battery, a sodium-ion battery, or a magnesium-ion battery, but is not limited thereto. The battery cell 20 may be cylindrical, flat, cuboid, or of another shape.

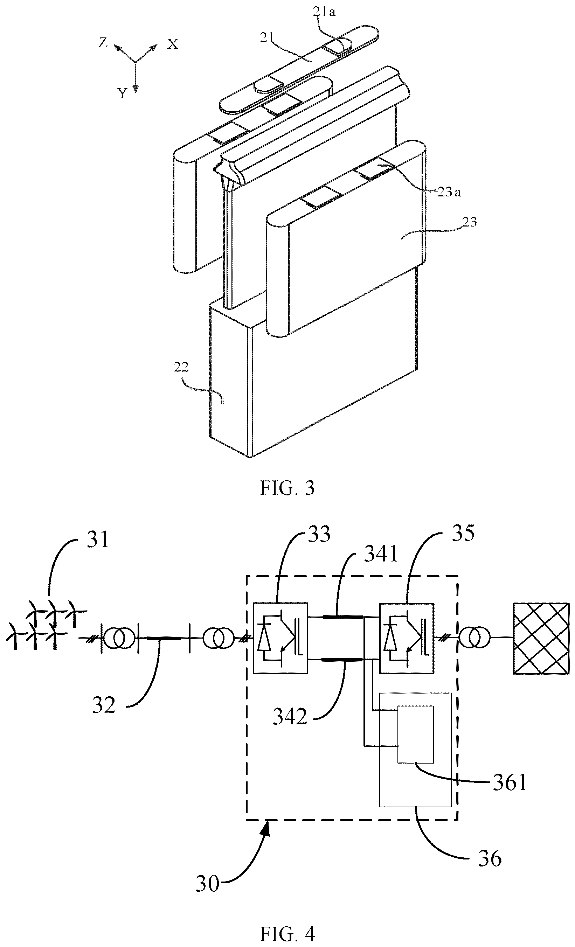

Refer to FIG. 3. FIG. 3 is a schematic structural exploded view of a battery cell 20 according to some embodiments of this application. The battery cell 20 refers to the smallest unit constituting a battery. As shown in FIG. 3, the battery cell 20 includes an end cover 21, a housing 22, an electrode assembly 23, and other functional components.

The end cover 21 refers to a component that covers an opening of the housing 22 to isolate an internal environment of the battery cell 20 from an external environment. A shape of the end cover 21 may be adapted to a shape of the housing 22 to fit the housing 22. This is not limited. Optionally, the end cover 21 may be made of a material with certain hardness and strength (such as aluminum alloy), so that the end cover 21 is less likely to deform when squeezed or impacted, enabling the battery cell 20 to have higher structural strength and improved safety performance. The end cover 21 may be provided with functional components such as an electrode terminal 21a. The electrode terminal 21a may be configured to be electrically connected to the electrode assembly 23 for outputting or inputting electrical energy of the battery cell 20. In some embodiments, the end cover 21 may further be provided with a pressure relief mechanism for releasing internal pressure when the internal pressure or a temperature of the battery cell 20 reaches a threshold. The material of the end cover 21 may be varied, such as copper, iron, aluminum, stainless steel, aluminum alloy, plastic, and the like. This is not particularly limited in the embodiments of this application. In some embodiments, an insulator may be provided on an inner side of the end cover 21, where the insulator may be configured to isolate an electrical connection component within the housing 22 from the end cover 21 to reduce a risk of short circuits. For example, the insulator may be made of plastic, rubber, or the like.

The housing 22 is a component configured to cooperate with the end cover 21 to form the internal environment of the battery cell 20, where the formed internal environment can accommodate the electrode assembly 23, an electrolyte, and other components. The housing 22 and the end cover 21 may be independent components, and an opening may be provided in the housing 22, so that the end cover 21 can close the opening to form the internal environment of the battery cell 20. The end cover 21 and the housing 22 may alternatively be integrated. This is not limited. Specifically, the end cover 21 and the housing 22 may form a common connection surface before other components are placed into the housing, and when the interior of the housing 22 needs to be sealed, the end cover 21 covers the housing 22. A shape and dimension of the housing 22 may be varied, such as a rectangular shape, a cylindrical shape, or a hexagonal prism shape. Specifically, the shape of the housing 22 may be determined based on a specific shape and dimension of the electrode assembly 23. A material of the housing 22 may be varied, such as copper, iron, aluminum, stainless steel, aluminum alloy, plastic, and the like. This is not particularly limited in the embodiments of this application.

The electrode assembly 23 is a component in which electrochemical reactions take place in the battery cell 100. The housing 22 may include one or more electrode assemblies 23. The electrode assembly 23 is primarily formed by winding or stacking a positive electrode plate and a negative electrode plate, and a separator is typically provided between the positive electrode plate and the negative electrode plate. Parts of the positive electrode plate and the negative electrode plate with active substances constitute a body of the electrode assembly, while parts of the positive electrode plate and the negative electrode plate without active substances constitute tabs 23a respectively. A positive tab and a negative tab may both be disposed at one end of the body or at two ends of the body separately. During the charge and discharge of the battery, the positive electrode active substance and the negative electrode active substance react with the electrolyte, and the tab 23a connects to the electrode terminal to form a current loop.

As shown in FIG. 4, FIG. 4 is a schematic structural diagram of a flexible direct-current power transmission system 30 according to some embodiments of this application. In these embodiments, an energy storage apparatus 36 is connected between a positive direct-current bus 341 and a negative direct-current bus 342 of a receiving-end converter 35 of the flexible direct-current power transmission system 30 and includes an energy storage battery 361. The energy storage battery 361 charges and/or discharges at a first power during normal operation of the flexible direct-current power transmission system 30. The energy storage battery 361 charges and/or discharges at a second power when a transmission fault occurs at a receiving-end converter 35 and results in a surplus power in the flexible direct-current power transmission system. The second power is greater than the first power. The first power is a power at which the energy storage battery 361 can operate normally, while the second power is a limit power of the energy storage battery 361. The battery used in the embodiments is a high-rate battery, capable of allowing short-term high-power charge. Generally, high-rate batteries are lithium batteries. The first power is less than or equal to a rated power of the energy storage battery 361, and the second power is greater than the rated power of the energy storage battery 361. Preferably, the second power is not less than 5 times the first power, and the second power is not greater than 7 times the first power.

The flexible direct-current power transmission system 30 transmits power generated by a power generation apparatus 31 through an alternating-current cable 32 to a sending-end converter 33; the sending-end converter 33 converts alternating current to direct current; and the current is then transmitted through a direct-current cable to the receiving-end converter 35. The direct-current cable includes a positive direct-current bus 341 and a negative direct-current bus 342, separately connecting to the sending-end converter 33 and the receiving-end converter 35. When the receiving-end converter 35 operates normally, the energy storage battery 361 operates at the first power. When a transmission fault occurs at the receiving-end converter 35 and results in the surplus power in the flexible direct-current power transmission system, the energy storage battery 361 operates at the second power. The energy storage battery 361, also referred to as a charge/discharge battery, is capable of charging and discharging. During charge, the energy storage battery 361 stores energy; and during discharge, the energy storage battery 361 releases energy. A high-rate battery is a battery capable of charging at a power exceeding a rated power for a short period. A lithium-ion battery is a battery charged at a high rate, and functions mainly based on movement of lithium ions between a positive electrode and a negative electrode. During charge and discharge, lithium ions intercalate and deintercalate back and forth between the two electrodes. During charge, lithium ions deintercalate from the positive electrode and intercalate into the negative electrode through the electrolyte, with the negative electrode in a lithium-rich state. During discharge, the process is reversed. The rated power of the energy storage battery 361 is the power at which the energy storage battery 361 operates normally. The first power is less than or equal to the rated power of the energy storage battery 361. In this case, the first power is the power at which the energy storage battery 361 operates normally. The second power is the power at which the energy storage battery 361 operates in a high-rate state, and thus is greater than the first power.

The larger second power is used for operation of the energy storage battery 361 to absorb the surplus power in the flexible direct-current power transmission system, and the smaller first power is used for operation of the energy storage battery 361 to implement routine energy storage and release. A power of the energy storage apparatus 36 is lowered, thereby lowering the costs of the energy storage apparatus 36. This approach ensures that the rated power of the energy storage battery 361 is less than the second power, resulting in a smaller power of the energy storage battery 361, thereby lowering the power of the energy storage apparatus 36 and reducing the costs of the energy storage apparatus 36. The second power of the energy storage battery 361 corresponds to a power of the flexible direct-current power transmission system 30, so the rated power of the energy storage battery 361 only needs to be approximately 15% to 20% of the power of the flexible direct-current power transmission system 30, lowering the power of the energy storage apparatus 36 and reducing the costs of the energy storage apparatus 36.

In some embodiments, discharge duration in which the energy storage battery 361 discharges at the first power is not less than 1 minute. Preferably, the discharge duration in which the energy storage battery 361 discharges at the first power is not less than 2 hours. When the sending-end converter 33 of the flexible direct-current power transmission system 30 is capable of performing voltage regulation in response to a transmission fault, charge duration in which the energy storage battery 361 charges at the second power is not less than 200 milliseconds. Alternatively, when the sending-end converter 33 of the flexible direct-current power transmission system 30 is incapable of performing voltage regulation in response to a transmission fault, charge duration in which the energy storage battery 361 charges at the second power is not less than 1 second. Preferably, when the sending-end converter 33 of the flexible direct-current power transmission system 30 is capable of performing voltage regulation in response to a transmission fault, charge duration in which the energy storage battery 361 charges at the second power is not greater than 500 milliseconds. Alternatively, when the sending-end converter 33 of the flexible direct-current power transmission system 30 is incapable of performing voltage regulation in response to a transmission fault, charge duration in which the energy storage battery 361 charges at the second power is not greater than 2 seconds.

Discharge of the energy storage battery 361 at the first power refers to discharge at the normal power. Since the energy storage battery 361 is not a primary discharge component, internal charge is generally surplus power from the flexible direct-current power transmission system 30 transferred to the energy storage battery 361. Therefore, during discharge, only this part of energy needs to be released. Thus, the discharge duration in which the energy storage battery 361 discharges at the first power is not less than 1 minute, preferably, not less than 2 hours. In addition, since the energy storage battery 361 typically charges at the second power when the sending-end converter 33 of the flexible direct-current power transmission system 30 is capable of responding to a transmission fault, the charge duration is not excessively long, and the charge stops quickly. Therefore, the charge duration in which the energy storage battery 361 chares at the second power is not less than 200 milliseconds, preferably, not greater than 500 milliseconds. When the sending-end converter 33 of the flexible direct-current power transmission system 30 is incapable of responding to a transmission fault, the charge duration in which the energy storage battery 361 charges at the second power is slightly extended. In this case, the charge duration in which the energy storage battery 361 charges at the second power is not less than 1 second, and preferably, the charge duration in which the energy storage battery 361 charges at the second power is not greater than 2 seconds.

This approach ensures that the energy storage battery 361 can normally discharge and operate. The charge duration in which the energy storage battery 361 charges at the second power ensures that the energy storage battery 361 can perform emergency energy storage during a fault in the flexible direct-current power transmission system 30, preventing damage to the flexible direct-current power transmission system 30, and further ensures that the energy storage battery 361 can perform emergency energy storage during a fault in the flexible direct-current power transmission system 30, preventing damage to the flexible direct-current power transmission system 30.

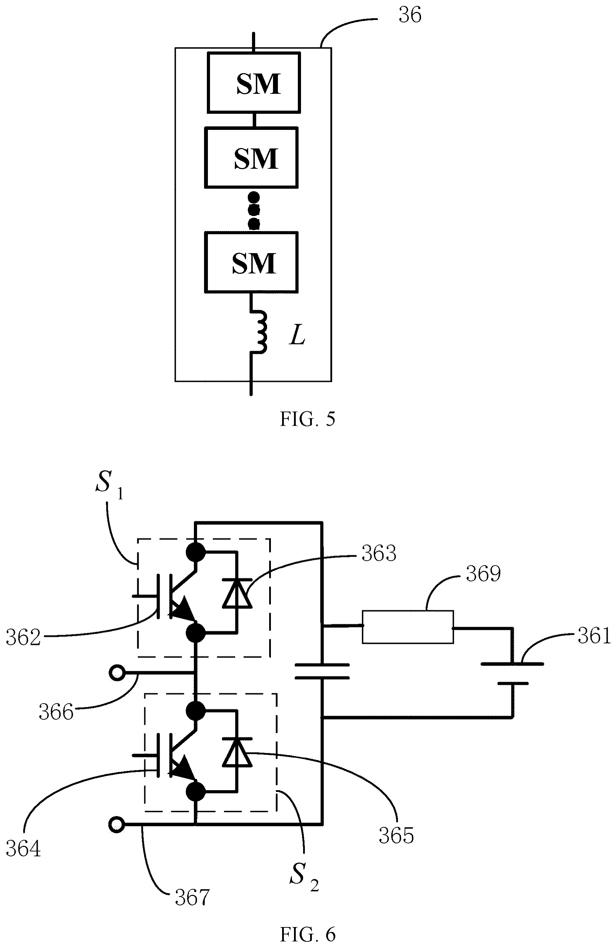

As shown in FIG. 5 and FIG. 6, FIG. 5 is a schematic structural diagram of an energy storage apparatus 36 according to some embodiments of this application, and FIG. 6 is a schematic structural diagram of an energy storage module SM according to some embodiments of this application. In some embodiments, the energy storage apparatus 36 includes a plurality of energy storage modules SM connected in series between the positive direct-current bus 341 and the negative direct-current bus 342. A first lead terminal 366 of a first energy storage module SM is connected to the positive direct-current bus 341, a first lead terminal 366 of each remaining energy storage module SM is connected to a second lead terminal 367 of a preceding energy storage module SM, and a second lead terminal 367 of a last energy storage module SM is connected to the negative direct-current bus 342. Each energy storage module SM includes an energy storage battery 361 and a switch circuit. The switch circuit is for connecting the energy storage battery 361 between a first lead terminal 366 and a second lead terminal 367 within a same energy storage module SM in a first state, and short-circuiting a first lead terminal 366 and a second lead terminal 367 within a same energy storage module SM in a second state. In some embodiments, the switch circuit includes a first switch module S1 and a second switch module S2. A first connection terminal of the first switch module S1 is connected to a positive electrode of the energy storage battery 361, and a second connection terminal of the first switch module S1 is connected to a first connection terminal of the second switch module S2. A second connection terminal of the second switch module S2 is connected to a negative electrode of the energy storage battery 361. The first lead terminal 366 is connected between the second connection terminal of the first switch module S1 and the first connection terminal of the second switch module S2, and the second lead terminal 367 is connected between the second connection terminal of the second switch module S2 and the negative electrode of the energy storage battery 361. When the second switch module S2 is switched on, the energy storage battery 361 is short-circuited. When the first switch module S1 is switched on, the energy storage battery 361 is connected between the positive direct-current bus 341 and the negative direct-current bus 342. In some embodiments, the first switch module S1 includes a first IGBT 362 (Insulated Gate Bipolar Transistor, insulated gate bipolar transistor) and a first diode 363, where the first connection terminal and the second connection terminal of the first switch module S1 correspond to a collector and an emitter of the first IGBT 362 respectively, a negative electrode of the first diode 363 is connected to the first connection terminal of the first switch module S1, and a positive electrode of the first diode 363 is connected to the second connection terminal of the first switch module S1; and the second switch module S2 includes a second IGBT 364 and a second diode 365, where the first connection terminal and the second connection terminal of the second switch module S2 correspond to a collector and an emitter of the second IGBT 364 respectively, a negative electrode of the second diode 365 is connected to the first connection terminal of the second switch module S2, and a positive electrode of the second diode 365 is connected to the second connection terminal of the second switch module S2. A first operation state is that a switch-on signal is given to the first IGBT 362 in the first switch module S1, and a switch-off signal is given to the second IGBT 364 in the second switch module S2. Through the switch-on or switch-off of the first IGBT 362 and the second IGBT 364, the energy storage battery 361 is charged or discharged, and an output voltage of a submodule is a voltage across the energy storage battery 361. This is a service state. Specifically, a switch-on signal is given to the first IGBT 362, and a switch-off signal is given to the second IGBT 364. This operation state corresponds to two operation modes, namely, switch-on of the first diode 363 and switch-on of the second diode 365. When the first diode 363 is switched on, the first IGBT 362 is switched off, and current flows through the first diode 363 to charge the energy storage battery 361. When the first IGBT 362 is switched on, the first diode 363 withstands a reverse voltage and is switched off, and current flows through the first IGBT 362 to discharge the energy storage battery 361. In the first operation state, the energy storage battery 361 is always connected between the positive direct-current bus 341 and the negative direct-current bus 342, and charges or discharges. In this case, the first operation state is referred to as a "service state". A second operation state is that a switch-off signal is given to both the first IGBT 362 in the first switch module S1 and the first IGBT 362 in the second switch module S2. Through the switch-on or switch-off of the first IGBT 362 and the second IGBT 364, the energy storage battery 361 is charged or bypassed, and is in a lockout state. Specifically, a switch-off signal is given to both the first IGBT 362 and the second IGBT 364. When the first diode 363 is switched on, current flows through the first diode 363 to charge the energy storage battery 361. When the second diode 365 is switch-on, current flows through the second diode 365 to bypass the energy storage battery 361. In this case, the energy storage battery 361 does not participate in operation, and is in the second operation state. Another second operation state is that a switch-off signal is given to the first IGBT 362 in the first switch module S1, and a switch-on signal is given to the second IGBT 364 in the second switch module S2. Through the switch-on or switch-off of the first IGBT 362 and the second IGBT 364, the energy storage battery 361 is bypassed, and then an output voltage of the energy storage battery 361 is zero. This is an isolated state. Specifically, a switch-off signal is given to the first IGBT 362, and a switch-on signal is given to the second IGBT 364. When the second IGBT 364 is switched on, the second diode 365 withstands a reverse voltage, and current flows through the second IGBT 364 to bypass the energy storage battery 361. When the second diode 365 is switched-on, the second IGBT 364 is switched-off, and current flows through the second diode 365 to bypass the energy storage battery 361. In the second operation state, the energy storage battery 361 is always bypassed, neither participating in charge nor discharge, and the output voltage of the energy storage battery 361 is zero. Each energy storage module SM further includes a buffer circuit 369, where the buffer circuit 369 is configured to filter current within the energy storage module SM. In addition, in some embodiments, the energy storage apparatus 36 includes a smoothing reactor L connected in series with the plurality of energy storage modules SM.

The IGBT is a composite fully-controlled voltage-driven power semiconductor component formed by a bipolar junction transistor (Bipolar Junction Transistor, BJT) and a metal oxide semiconductor (Metal Oxide Semiconductor, MOS) field-effect transistor, and has advantages of a high input impedance of a metal-oxide-semiconductor field-effect transistor (Metal-Oxide-Semiconductor Field-Effect Transistor, MOSFET) and a low forward voltage drop of a giant transistor (Giant Transistor, GTR). The GTR has a low saturation voltage drop and high current density, but requires a large driving current. The MOSFET requires an extremely low driving power and has a high switching speed, but has a large forward voltage drop and low current density. The IGBT combines the advantages of both components, with a low driving power and low saturation voltage drop. It is highly suitable for converter systems with a direct-current voltage of 600 V or higher, such as alternating-current motors, inverters, switch power sources, lighting circuits, and traction drives. The buffer circuit 369, for example, is an inductor connected in series with the energy storage module SM, specifically, for example, in series with the energy storage battery 361. The smoothing reactor L refers to an electronic apparatus used in a direct-current loop after rectification. A pulse number of a rectifier circuit is always finite, and there is always ripple in an output rectified voltage. The ripple is often harmful and needs to be suppressed by the smoothing reactor L. Converter stations for direct-current transmission are equipped with smoothing reactors L to make output direct current close to ideal direct current. In thyristor electric drive powered by direct current, the smoothing reactor L is also indispensable. The smoothing reactor L and a direct-current filter jointly constitute a direct-current harmonic filter circuit on a direct-current side of a high-voltage direct-current converter station. The smoothing reactor L, as an important device in a high-voltage direct-current converter station, is generally connected in series between a direct-current output terminal of each pole converter and a direct-current line.

The energy storage modules SM are connected in series, allowing flexible integration of the energy storage modules SM, and in the second state, the energy storage modules SM can be protected, preventing overload and burnout of the energy storage modules SM. This approach controls the operation state of the energy storage battery 361, enabling smooth integration and charge/discharge of the energy storage battery 361. The combination of IGBTs and diodes enable flexible switch of the switch modules. This is convenient and efficient. The buffer circuit 369 is configured to filter current, optimizing power quality. The smoothing reactor L is configured to stabilize waveforms of the energy storage modules SM, resulting in smoother current within the energy storage apparatus 36.

This application further provides a flexible direct-current power transmission system 30, where the flexible direct-current power transmission system 30 includes the energy storage apparatus 36 as described in any one of the above embodiments. Specifically, the flexible direct-current power transmission system 30 includes a power generation apparatus 31, an alternating-current cable 32, a sending-end converter 33, a direct-current cable, an energy storage apparatus 36, and a receiving-end converter 35. Power generated by the power generation apparatus 31 is transmitted through the alternating-current cable 32 to the sending-end converter 33, where the sending-end converter 33 converts alternating current to direct current, and the current is then transmitted through the direct-current cable to the receiving-end converter 35. The energy storage apparatus 36 is connected between the sending-end converter 33 and the receiving-end converter 35, in parallel with the receiving-end converter 35.

The power generation apparatus 31 is, for example, an offshore wind power generation apparatus 31 or other wind power generation apparatuses 31.

The larger second power of the energy storage battery 361 is used for absorbing surplus power in the flexible direct-current power transmission system, and the smaller first power of the energy storage battery 361 is used for routine energy storage and release. A power of the energy storage apparatus 36 is lowered, thereby lowering the costs of the energy storage apparatus 36 and the flexible direct-current power transmission system 30.

In some specific application scenarios, to address a load-shedding requirement for fault ride-through in grid connection systems based on flexible direct-current power transmission of offshore wind power, this application replaces an energy dissipation resistor in an original direct-current dissipation apparatus with the energy storage battery 361 and replaces the original direct-current dissipation apparatus with the energy storage apparatus 36. The designed energy storage apparatus 36 is connected between the positive direct-current bus 341 and the negative direct-current bus 342 of the receiving-end converter 35 of the flexible direct-current power transmission system 30. Since the second power of the energy storage battery 361 is not less than 5 times the first power and not greater than 7 times the first power, a total power of the energy storage battery 361 in this application can be reduced from the rated power of the flexible direct-current power transmission system 30 to approximately 15% to 20% of the rated power. During steady-state operation, the energy storage apparatus 36 can operate at the first power for a long period. During a grid fault, the energy storage battery 361 can replace the direct-current dissipation apparatus, achieving short-term high-rate fast charge, absorbing surplus wind power with a charge capacity 5 to 7 times the first power of the energy storage battery 361, and storing the surplus wind power within the energy storage battery 361, to achieve power dissipation.

The short-term high-rate second power of the energy storage battery 361 means that this technology only requires energy storage based on approximately 15% to 20% of the rated power of the flexible direct-current power transmission system 30 to achieve 100% power absorption of the rated power of the flexible direct-current power transmission system 30 for a short period, satisfying the requirements for inertia response, steady-state frequency regulation, and surplus power absorption in grid connection systems based on flexible direct-current transmission of offshore wind power. During steady-state operation, the energy storage apparatus 36 can achieve inertia and frequency regulation. In addition, after a grid fault occurs, the energy storage apparatus 36 can withstand a charge current 5 to 7 times larger for a short period (hundreds of milliseconds), absorbing surplus wind power, thereby replacing the original dissipation apparatus in the flexible direct-current power transmission system 30. The designed energy storage battery 361 combines steady-state grid frequency support capability and transient surplus power absorption capability, reducing the construction costs of the flexible direct-current power transmission system 30.

The above are merely embodiments of this application and are not intended to limit the patent scope of this application. Any equivalent structural or procedural transformations made based on the specification and drawings of this application, or direct or indirect application in other related technical fields, are similarly included within the patent protection scope of this application.

## Claims

1. An energy storage apparatus, **characterized in that** the energy storage apparatus is connected between a positive direct-current bus and a negative direct-current bus of a receiving-end converter of a flexible direct-current power transmission system and comprises an energy storage battery, wherein the energy storage battery charges and/or discharges at a first power during normal operation of the flexible direct-current power transmission system, and the energy storage battery charges and/or discharges at a second power when a transmission fault occurs at the receiving-end converter and results in surplus power in the flexible direct-current power transmission system, wherein the second power is greater than the first power.

2. The energy storage apparatus according to claim 1, **characterized in that** the first power is less than or equal to a rated power of the energy storage battery, and the second power is greater than the rated power of the energy storage battery.

3. The energy storage apparatus according to claim 1, **characterized in that** the second power is not less than 5 times the first power, and the second power is not greater than 7 times the first power.

4. The energy storage apparatus according to claim 1, **characterized in that** discharge duration in which the energy storage battery discharges at the first power is not less than 1 minute.

5. The energy storage apparatus according to claim 4, **characterized in that** the discharge duration in which the energy storage battery discharges at the first power is not less than 2 hours.

6. The energy storage apparatus according to claim 1, **characterized in that** when a sending-end converter of the flexible direct-current power transmission system is capable of performing voltage regulation in response to the transmission fault, charge duration in which the energy storage battery charges at the second power is not less than 200 milliseconds; or when a sending-end converter of the flexible direct-current power transmission system is incapable of performing voltage regulation in response to the transmission fault, charge duration in which the energy storage battery charges at the second power is not less than 1 second.

7. The energy storage apparatus according to claim 6, **characterized in that** when the sending-end converter of the flexible direct-current power transmission system is capable of performing voltage regulation in response to the transmission fault, the charge duration in which the energy storage battery charges at the second power is not greater than 500 milliseconds; or when the sending-end converter of the flexible direct-current power transmission system is incapable of performing voltage regulation in response to the transmission fault, the charge duration in which the energy storage battery charges at the second power is not greater than 2 seconds.

8. The energy storage apparatus according to any one of claims 1 to 7, **characterized in that** the energy storage apparatus comprises a plurality of energy storage modules connected in series between the positive direct-current bus and the negative direct-current bus, a first lead terminal of a first energy storage module is connected to the positive direct-current bus, a first lead terminal of each remaining energy storage module is connected to a second lead terminal of a preceding energy storage module, a second lead terminal of a last energy storage module is connected to the negative direct-current bus, and each energy storage module comprises the energy storage battery and a switch circuit, wherein the switch circuit is for connecting the energy storage battery between a first lead terminal and a second lead terminal within a same energy storage module in a first state, and short-circuiting a first lead terminal and a second lead terminal within a same energy storage module in a second state.

9. The energy storage apparatus according to claim 8, **characterized in that** the switch circuit comprises a first switch module and a second switch module, wherein a first connection terminal of the first switch module is connected to a positive electrode of the energy storage battery, a second connection terminal of the first switch module is connected to a first connection terminal of the second switch module, a second connection terminal of the second switch module is connected to a negative electrode of the energy storage battery, the first lead terminal is connected between the second connection terminal of the first switch module and the first connection terminal of the second switch module, and the second lead terminal is connected between the second connection terminal of the second switch module and the negative electrode of the energy storage battery.

10. The energy storage apparatus according to claim 9, **characterized in that** the first switch module comprises a first IGBT and a first diode, the first connection terminal and the second connection terminal of the first switch module correspond to a collector and an emitter of the first IGBT respectively, a negative electrode of the first diode is connected to the first connection terminal of the first switch module, and a positive electrode of the first diode is connected to the second connection terminal of the first switch module; and
the second switch module comprises a second IGBT and a second diode, the first connection terminal and the second connection terminal of the second switch module correspond to a collector and an emitter of the second IGBT respectively, a negative electrode of the second diode is connected to the first connection terminal of the second switch module, and a positive electrode of the second diode is connected to the second connection terminal of the second switch module.

11. The energy storage apparatus according to any one of claims 8 to 10, **characterized in that** each energy storage module further comprises a buffer circuit, and the buffer circuit is configured to filter current within the energy storage module.

12. The energy storage apparatus according to any one of claims 8 to 10, **characterized in that** the energy storage apparatus comprises a smoothing reactor connected in series with the plurality of energy storage modules.

13. A flexible direct-current power transmission system, **characterized in that** the flexible direct-current power transmission system comprises the energy storage apparatus according to any one of claims 1 to 12.
